# EUROPEAN PATENT APPLICATION

(11) **EP 4 778 647 A1**
(43) Date of publication of application: **22.07.2026**
(21) Application number: 24853034.7
(22) Date of filing: 26.11.2024
(51) Int. Cl.: B22D 1/00, B22C 1/00, B22F 1/00, B22D 23/00, B22D 23/02, B22D 23/06, B22D 23/10, B22D 7/00, B22D 7/12, B22D 9/00, B22D 27/04, B22D 33/00, B22F 10/22, B33Y 10/00, B22F 12/55, B22F 10/364, B22F 12/20, B22F 10/38, B22F 12/53, B33Y 30/00, B22F 10/50, B22F 12/45

(54) **LIQUID METAL ADDITIVE MANUFACTURING APPARATUS AND METHOD**

(30) Priority: 07.11.2024 CN 202411578464
(71) Applicant: SHANGHAI JIAOTONG UNIVERSITY, Minhang District Shanghai 200240 (CN)
(72) Inventor: ZHANG, Jiao, Shanghai 200240 (CN); SUN, Baode, Shanghai 200240 (CN); DONG, Qing, Shanghai 200240 (CN); HAN, Yanfeng, Shanghai 200240 (CN)
(74) Representative: Lorenz & Kollegen
(86) International application number: PCT/CN2024/134574
(87) International publication number: WO 2026/097629

(57) **Abstract**

A liquid metal additive manufacturing device and method are provided, relating to the technical field of metallurgy. The device includes a vacuum chamber, and a translation element, a casting mold element, a cooling element, a scanning and heating element and a jet element which are arranged in the vacuum chamber. The casting mold element is movably installed on the translation element and capable of reciprocating in a length direction of the translation element. The cooling element, the scanning and heating element and the jet element are all located above the translation element, and are sequentially arranged in the length direction of the translation element. The jet element can inject a melt into the casting mold element. A lower end of the cooling element can extend into the casting mold element to cool and press down the melt until the melt in the casting mold element solidifies to form an alloy ingot. The scanning and heating element can heat and melt a surface layer of the alloy ingot. The formation of internal loose defects can be avoided while increasing a thickness of the alloy ingot.

## Description

### TECHNICAL FIELD

The present disclosure relates to the technical field of metallurgy, and in particular to a liquid metal additive manufacturing device and method.

### BACKGROUND

The preparation of high-uniformity metal ingots has always been a difficult problem in industry, the reason is that the change of cooling conditions can easily lead to large structural differences during the solidification of alloys. For example, the cooling rate of the edge of ingot is high, which is easy to form fine equiaxed crystal structure. The cooling rate at the core of the ingot slows down, which is easy to form coarse grains. Meanwhile, for the alloy with high alloy content, due to the specific gravity segregation of alloy elements, or the segregation phenomenon of alloy elements in liquid-solid two phases, it is easy to cause a large macro-segregation problem, that is, the chemical composition of the alloy elements is obviously different at different positions of the alloy ingot. The fluctuation of chemical composition will lead to obvious differences in mechanical properties of the alloy product at different positions, which needs to be avoided in production. However, the traditional metal ingot casting technology, such as continuous casting or semi-continuous casting, is difficult to avoid the above problems.

Liquid metal additive manufacturing is an emerging metal material preparation technology. Due to the principle of "discrete-stacking" is adopted, and the liquid metal is directly used as an additive raw material, the preparation efficiency is improved, and the liquid metal additive manufacturing is an ideal method for preparing a high-uniformity alloy ingot. However, there are some problems in the publicly available technology, that is, a condensation system is arranged at the bottom of the alloy ingot, and the alloy liquid spreads on the top of the ingot during the preparation, and the latent heat of solidification released by this part of the alloy liquid during solidification needs to be transferred downwards through a thickness direction of the alloy ingot and taken away by the condensation system. When the thickness of the alloy ingot is small, the thermal resistance of the alloy ingot itself is small. However, when the thickness of the alloy ingot increases to a certain critical value, the thermal resistance of the alloy ingot itself will seriously affect the transfer of the latent heat of solidification, which may lead to a significant decrease in the cooling rate of the surface layer of the alloy ingot, and is easy to lead to obvious grain structure differences. Meanwhile, with the increase of the thickness of the alloy ingot, the temperature gradient from the surface to the bottom of the alloy ingot decreases continuously. For the alloy, this means that a space depth range corresponding to a solid-liquid two-phase zone at the front of the liquid-solid interface will increase continuously, that is, the thickness of a mushy zone will increase continuously, and the expansion of the solidification zone will bring greater risk of shrinkage defects.

### SUMMARY

An objective of the present disclosure is to provide a liquid metal additive manufacturing device and method, thus solving the problems in the prior art. The formation of internal loose defects can be avoided while increasing a thickness of the alloy ingot.

To achieve the objective above, the present disclosure employs the following technical solution:
The present disclosure further provides a liquid metal additive manufacturing method, including:
a vacuum chamber;
a translation element, arranged in the vacuum chamber;
a casting mold element, arranged in the vacuum chamber, where the casting mold element is movably installed on the translation element, and capable of reciprocating in a length of the translation element;
a jet element, arranged in the vacuum chamber, where the jet element is located above the translation element, and capable of injecting a melt into the casting mold element;
a cooling element, arranged in the vacuum chamber, where the cooling element is located above the translation element, a lower end of the cooling element can extend into the casting mold element to cool and press down the melt until the melt in the casting mold element solidifies to form an alloy ingot; and
a scanning and heating element, arranged in the vacuum chamber, where the scanning and heating element is located above the translation element, and capable of heating and melting a surface layer of the alloy ingot.

The cooling element, the scanning and heating element and the jet element are sequentially arranged in the length direction of the translation element.

Preferably, the translation element includes a slide rail, and a driving part. The driving part can drive the casting mold element to reciprocate in a length direction of the slide rail to be below the jet element, the cooling element or the scanning and heating element.

Preferably, the casting mold element includes a casting mold body, and a bottom plate. A lower end of the casting mold body is movably connected to the translation element, the bottom plate is installed on an inner bottom surface of the casting mold body, and the casting mold body is used for molding the alloy ingot.

Preferably, the casting mold body is made of a high-temperature-resistant thermal insulation material.

Preferably, the jet element includes a crucible, a heater, a push-rod type indenter, a baffle, and multiple nozzles. The crucible is used for storing the melt, and the heater is installed at the periphery of the crucible. The nozzle is installed at a lower end of the crucible and communicates with the inside of the crucible. The push-rod type indenter is movably installed in the crucible, and the push-rod type indenter can push out the melt in the crucible through the nozzle when moving downwards in the crucible. The baffle is movably installed at a lower end of the nozzle to block or open the nozzle.

Preferably, the multiple nozzles are arranged in array at a lower bottom surface of the crucible.

Preferably, the cooling element is a water-cooling indenter which is internally provided with a cooling channel, both ends of the cooling channel can communicate with outside environment, and the cooling channel is used for the introduction of cooling water.

Preferably, the scanning and heating element is an arrayed laser, multiple laser heads on the arrayed laser are linearly arranged, and an arrangement direction of the multiple laser heads is parallel to the length direction of the translation element. The arrayed laser can move reciprocate in a width of the translation element to cover the whole upper surface of the alloy ingot in the casting mold element.

Preferably, the scanning and heating element is located above a first station of the translation element, the jet element is located above a second station of the translation element, and the cooling element is located above a third station of the translation element.

The present disclosure further provides a liquid metal additive manufacturing method. The liquid metal additive material device according to any one of above technical solutions is adopted, the method includes the following steps:
S1. refining an alloy melt to be prepared, then injecting the alloy melt into a crucible of a jet element, blocking a nozzle of the jet element with a baffle, turning on a heater of the jet element, controlling a temperature of the alloy melt above a freezing point temperature and holding the temperature to form a melt;
S2. turning on cooling water, and enabling the cooling water to circulate in a cooling element, vacuumizing a vacuum chamber and filling the vacuum chamber with high-purity argon to a normal pressure;
S3. moving a casting mold element to a second station of a translation element, and removing the baffle below the nozzle, pushing downwards a push-rod type indenter of the jet element, and enabling the melt to form an arrayed liquid column through the nozzle under the action of pressure to enter the casting mold element, stopping pushing the push-rod type indenter when a thickness of a liquid layer in the casting mold element reaches a set thickness value θ₁, and blocking the nozzle with the baffle;
S4. moving the casting mold element filled with the melt to a third station, turning on a water-cooling indenter and gently pressing down the water-cooling indenter along an inner wall of the casting mold element, and when the melt in the casting mold element completely reaches a solidification state to form an alloy ingot, lifting the water-cooling indenter;
S5. moving the casting mold element loaded with the alloy ingot to a first station, turning on an arrayed laser, scanning and heating a surface layer of the alloy ingot in a horizontal direction, remelting surface metal with a thickness of θ₂, wherein θ₂ is less than θ₁, and then turning off the arrayed laser; and
S6. moving the casting mold element to the second station again, removing the baffle below the nozzle, pushing the push-rod type indenter downwards, enabling the melt to form an arrayed liquid column through the nozzle under the action of pressure to enter the casting mold element; and stopping pushing the push-rod type indenter when the thickness of the liquid layer in the casting mold element reaches a set thickness value θ₁, and blocking the nozzle with the baffle; and
S7. repeating S3-S6 for multiple times to finally obtain an alloy ingot.

Compared with the prior art, the present disclosure has the following technical effects:
According to the liquid metal additive manufacturing device and method provided by the present disclosure, the casting mold element is movably installed on the translation element, and can move reciprocate in the length direction of the translation element. The cooling element, the scanning and heating element and the jet element are all located above the translation element and sequentially arranged in the length direction of the translation element, such that the casting mold element is aligned under the jet element, the cooling element and the scanning and heating element respectively through the movement of the casting mold element along the translation element, thus carrying out different procedures. The jet element can inject a melt into the casting mold element, and the lower end of the cooling element can extend into the casting mold element to cool and press down the melt until the melt in the casting mold element solidifies to form an alloy ingot. Then, a top cooling mode is adopted in the liquid metal additive process of the alloy ingot, a liquid molding layer on the surface is gently pressed while cooling, and when the thickness of the alloy ingot increases, a molten metal layer spread by surface additive of the alloy ingot can always keep a high cooling rate. Meanwhile, the molding under a certain pressure can avoid the formation of internal loose defects. The scanning and heating element can heat and melt the surface layer of the alloy ingot, such that when the next layer of melt is injected, the surface layer of the alloy ingot can be metallurgically bound with the next layer of melt, and finally, a high-uniformity alloy ingot.

### BRIEF DESCRIPTION OF THE DRAWINGS

To describe the technical solutions of the embodiments of the present disclosure or in the prior art more clearly, the following briefly introduces the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic structural diagram of a liquid metal additive manufacturing device according to Embodiment 1;
FIG. 2 is a cross-sectional view of a casting mold element according to Embodiment 1;
FIG. 3 is a top view of a casting mold element according to Embodiment 1;
FIG. 4 is a cross-sectional view of a jet element according to Embodiment 1;
FIG. 5 is a top view of a jet element according to Embodiment 1;
FIG. 6 is a cross-sectional view of a cooling element according to Embodiment 1;
FIG. 7 is a front view of a scanning and heating element according to Embodiment 1;
FIG. 8 is a top view of a scanning and heating element according to Embodiment 1;
FIG. 9 is a process view of a cooling element according to Embodiment 2 when used to cool and press down a melt;
FIG. 10 is a bottom view of an internal grain structure of a high-uniformity 7085 aluminum alloy ingot according to a specific embodiment;
FIG. 11 is a top view of an internal grain structure of a high-uniformity 7085 aluminum alloy ingot according to a specific embodiment.

In the drawings: 1-translation element; 11-slide rail; 12-driving part; 2-casting mold element; 21-casting mold body; 22-bottom plate; 3-jet element; 31-crucible; 32-push-rod type indenter; 33-heater; 34-nozzle; 35-baffle; 4-cooling element; 41-water-cooling indenter; 42-cooling channel; 5-scanning and heating element; 51-laser head; 52-arrayed laser; 6-alloy ingot; 7-melt; 8-vacuum chamber.

### DETAILED DESCRIPTION OF THE EMBODIMENTS

The following clearly and completely describes the technical solutions in the embodiments of the present disclosure with reference to the accompanying drawings in the embodiments of the present disclosure. Apparently, the described embodiments are merely a part rather than all of the embodiments of the present disclosure. All other embodiments obtained by those of ordinary skill in the art based on the embodiments of the present disclosure without creative efforts shall fall within the scope of protection of the present disclosure.

An objective of the present disclosure is to provide a liquid metal additive manufacturing device and method, thus solving the problems in the prior art. The formation of internal loose defects can be avoided while increasing a thickness of the alloy ingot.

In order to make the objectives, features and advantages of the present disclosure more clearly, the present disclosure is further described in detail below with reference to the embodiments.

### Embodiment 1

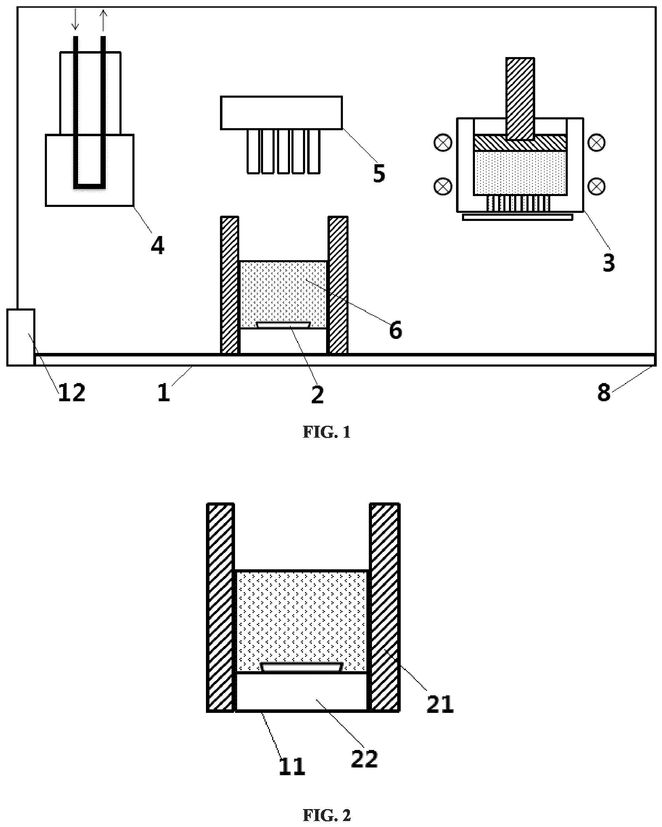

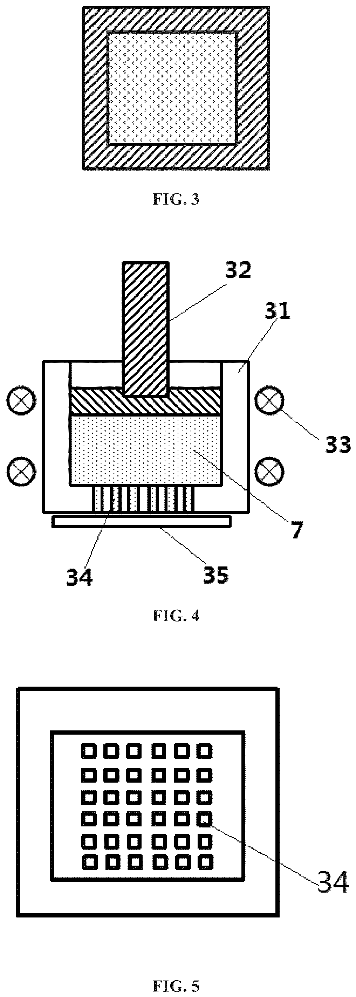

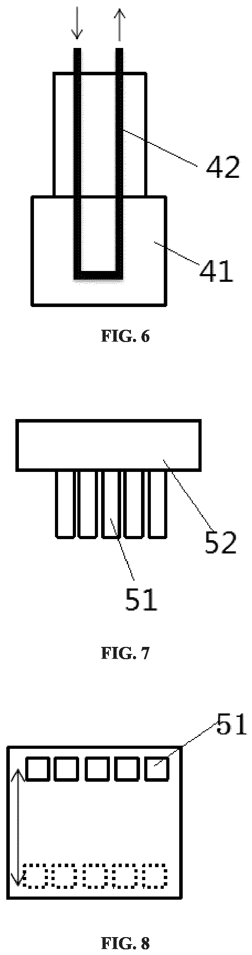

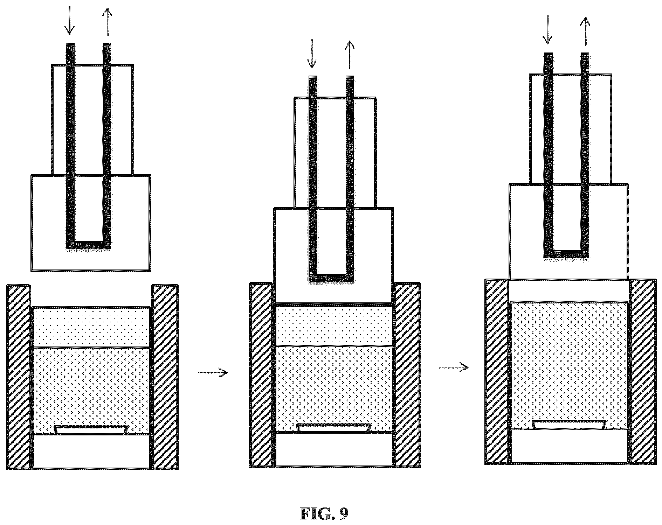

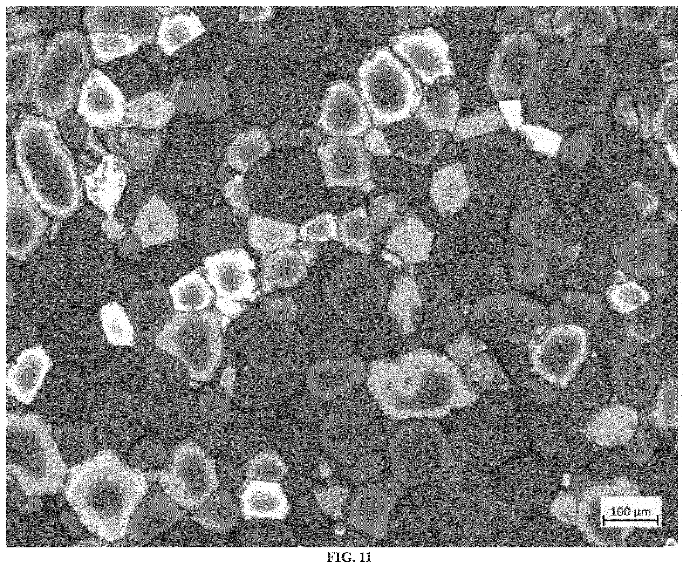

As shown in FIG. 1 to FIG. 11, this embodiment provides a liquid metal additive manufacturing device, including a vacuum chamber 8, and a translation element 1, a casting mold element 2, a cooling element 4, a scanning and heating element 5 and a jet element 3 arranged in the vacuum chamber 8. The vacuum chamber 8 can be used to form a vacuum environment required for manufacturing. The casting mold element 2 is movably installed on the translation element 1, and can move reciprocate along the length direction of the translation element 1. The cooling element 4, the scanning and heating element 5 and the jet element 3 are all located above the translation element 1 and sequentially arranged in a length direction of the translation element 1, such that the casting mold element 2 is aligned under the jet element 3, the cooling element 4 and the scanning and heating element 5 respectively through the movement of the casting mold element 2 along the translation element 1, thus carrying out different procedures. The jet element 3 can inject a melt into the casting mold element 7, and the lower end of the cooling element 4 can extend into the casting mold element 2 to cool and press down the melt 7 until the melt in the casting mold element 2 solidifies to form an alloy ingot 6. Then, a top cooling mode is adopted in the liquid metal additive process of the alloy ingot 6, a liquid molding layer on the surface is gently pressed while cooling, and when the thickness of the alloy ingot 6 increases, a molten metal layer spread by surface additive of the alloy ingot can always keep a high cooling rate. Meanwhile, the molding under a certain pressure can avoid the formation of internal loose defects. The scanning and heating element 5 can heat and melt the surface layer of the alloy ingot 6, such that when the next layer of melt 7 is injected, the surface layer of the alloy ingot 6 can be metallurgically bound with the next layer of melt 7, and finally, a high-uniformity alloy ingot.

Specifically, the translation element 1 includes a slide rail 11, and a driving part 12. The driving part 12 can make the casting mold element 2 reciprocate in a length direction of the slide rail 11 to be below the jet element 3, the cooling element 4, or the scanning and heating element 5, thus achieving different procedures. The driving part 12 may be a lead screw slider structure, a linear motor structure, etc. Those skilled in the art can make adaptive changes to the specific structural form of the driving part 12 according to actual needs.

The casting mold element 2 includes a casting mold body 21, and a bottom plate 22. A lower end of the casting mold body 21 is movably connected to the translation element 1, and can reciprocate in the length direction of the translation element 1. The bottom plate 22 is installed on an inner bottom surface of the casting mold body 21, and the casting mold body 21 is used for molding the alloy ingot 6.

The casting mold body 21 is made of a high-temperature-resistant thermal insulation material. The shape of the casting mold body 21 may be adaptively adjusted according to the shape of the required alloy ingot 6, thus improving adaptability.

The jet element 3 includes a crucible 31, a heater 33, a push-rod type indenter 32, a baffle 35, and multiple nozzles 34. The crucible 31 is used for storing the melt 7, the heater 33 is installed at the periphery of the crucible 31, and then the melt 7 in the crucible 31 can be heated and kept warm through the heater 33. The nozzle 34 is installed at a lower end of the crucible 31 and communicates with the internal of the crucible 31, thus discharging the melt 7 in the crucible 31 through the nozzle 34. The push-rod type indenter 32 is movably installed in the crucible 31, and the power of the push-rod type indenter 32 can be provided by a hydraulic push rod, a linear motor, and the like. When the push-rod type indenter 32 moves downwards in the crucible 31, the melt 7 in the crucible 31 can be pushed out through the nozzle 34, thus making the melt 7 enter the casting mold element 2. The baffle 35 is movably installed at the lower end of the nozzle 34, and can be used to block or open the nozzle 34, thus facilitating the discharging, or stopping the discharging, of the melt 7.

The multiple nozzles 34 are arranged in an array at a lower bottom surface of the crucible 31, thus achieving uniform distribution, and keeping the jet range of the nozzle consistent with the cross section of the casting mold body 21 during preparation.

The cooling element 4 is a water-cooling indenter 41 which can achieve ascending and descending under the driving of the hydraulic push rod, the linear motor, and the like. The water-cooling indenter 41 can perform gentle pressing action, and is internally provided with a cooling channel 42 for introducing cooling water. Both ends of the cooling channel 42 can communicate with an outside environment, thus achieving the flowing and circulation of the cooling water, and further achieving the cooling of the melt 7 through the heat exchange among the cooling water, the water-cooling indenter 41 and the melt 7. Moreover, the water-cooling indenter 41 can make the alloy ingot 6 reach a more compact state while cooling the melt 7 layer on the surface of the alloy ingot 6.

The scanning and heating element 5 is an arrayed laser 52, multiple laser heads 51 on the arrayed laser 52 are linearly arranged, and an arrangement direction of the multiple laser heads 51 is parallel to the length direction of the translation element 1. The arrayed laser 52 can reciprocate in a width of the translation element 1 to cover the whole upper surface of the alloy ingot 6 in the casting mold element 2, such that the scanning and heating of the surface layer of the alloy ingot 6 can be achieved to melt the metal with a certain thickness on the surface layer of the alloy ingot 6 and facilitate the bonding with the next layer of melt 7.

The scanning and heating element 5 is located above a first station of the translation element 1, the jet element 3 is located above a second station of the translation element 1, and the cooling element 4 is located above a third station of the translation element 1.

### Embodiment 2

The present disclosure further provides a liquid metal additive manufacturing method. The liquid metal additive material device in Embodiment 1 is used, the method includes the following steps:
S1. An alloy melt to be prepared is refined, and then injected into a crucible 31 of a jet element 31, a nozzle 34 of the jet element 3 is blocked with a baffle 35, a heater 33 of the jet element 3 is turned on, and a temperature of the alloy melt is controlled above a freezing point temperature, and the alloy melt is kept warm to form a melt 7.
S2. Cooling water is started to circulate in a cooling element, meanwhile, a vacuum chamber is vacuumized and filled with high-purity argon to a normal pressure.
S3. The casting mold element 2 is moved to a second station of a translation element 1, and the baffle 35 below the nozzle 34 is removed, a push-rod type indenter 32 of the jet element 3 is pushed downwards to make the melt 7 form an arrayed liquid column through the nozzle 34 under the action of pressure to enter the casting mold element 2. When a thickness of a liquid layer in the casting mold element 2 reaches a set thickness value θ₁, the pushing of the push-rod type indenter 32 is stopped, and the nozzle 34 is blocked with the baffle 35.
S4. The casting mold element 2 filled with the melt 7 is moved to a third station, a water-cooling indenter 41 is turned on and gently pressed down along an inner wall of the casting mold element 2, and when the melt 7 in the casting mold element 2 completely reaches a solidification state to form an alloy ingot 6, the water-cooling indenter 41 is lifted.
S5. The casting mold element 2 loaded with the alloy ingot 6 is moved to a first station, an arrayed laser 52 is started to scan and heat a surface layer of the alloy ingot 6 in a horizontal direction, the surface metal with a thickness of θ₂ is remolten, where θ₂ is less than θ₁, and then the arrayed laser 52 is turned off.
S6. The casting mold element 2 is moved to the second station again, the baffle 35 below the nozzle 34 is removed, the push-rod type indenter 32 is pushed downwards to make the melt form an arrayed liquid column through the nozzle under the action of pressure to enter the casting mold element. When the thickness of the liquid layer in the casting mold element reaches a set thickness value θ₁ again, the pushing of the push-rod type indenter 32 is stopped, and the nozzle 34 is blocked with the baffle 35.
S7. S3-S6 are repeated for multiple times to finally obtain an alloy ingot 6.

### Specific embodiment:

The specific embodiment may be suitable for the preparation of aluminum, magnesium, zinc, titanium, copper, and alloy ingots 6 thereof, and can also be applied to the preparation of ingot blanks of steel materials. Taking the preparation of a 7085 aluminum alloy ingot as an example, the setting range of main parameters are as follows:
an internal pressure P of the vacuum chamber 8, 0≤P<1 MPa;
a diameter d of the nozzle 34, 0<d<50 mm;
a spacing s between the nozzles 34, 0<s<200 mm;
a thickness θ₁ of the melt 7 injected once into the casting mold body 21, 0<θ₁<200 mm;
a downward speed v₁ of the push-rod type indenter 32, 0< v₁<300 mm/s;
a melting thickness θ₂ of the surface metal in the casting mold body 21, 0< θ₂<50 mm.

The preparation process includes the following steps:
S1. 7085 aluminum alloy melt is degassed and filtered at 750°C, then injected into the crucible 31, the nozzle 34 is blocked with the baffle 35, the heater 33 is turned on to keep the temperature of 7085 aluminum alloy melt at 720°C.
S2. Cooling water is turned on, and the whole vacuum chamber 8 is vacuumized and filled with high-purity argon to a normal pressure.
S3. The casting mold element 2 is moved to the second station, the baffle 35 below the nozzle 34 (the diameter of the nozzle 34 is 2.4 mm, and the spacing between the nozzles 34 is 7.6 mm) is removed, the push-rod type indenter 32 is pushed downwards at a speed of 1.3 mm/s, such that the 7085 aluminum alloy melt can form an arrayed liquid column through the nozzle 34 under the action of the pressure to enter the casting mold element 2. When a thickness of a liquid layer in the casting mold element 2 reaches 15 mm, the pushing of the push-rod type indenter 32 is stopped, and the nozzle 34 is blocked with the baffle 35.
S4. The casting mold element 2 is moved to the third station, the water-cooling indenter 41 is turned on and gently pressed down along an inner wall of the casting mold element 2. When the 7085 aluminum alloy melt completely reaches a solidification state to form the alloy ingot 6, the water-cooling indenter 41 is lifted.
S5. The casting mold element 2 is moved to the first station, an arrayed laser 52 is turned on to scan and heat the surface layer of the alloy ingot 6 in a horizontal direction, the surface metal with a thickness of 5mm is re-molten, and then the arrayed laser 52 is turned off.
S6. The casting mold element 2 is moved to the second station again, the baffle 35 below the nozzle 34 is removed, the push-rod type indenter 32 is pushed downwards to make the 7085 aluminum alloy melt form an arrayed liquid column through the nozzle 34 under the action of the pressure to enter the casting mold element 2. When the thickness of the liquid layer in the casting mold element 2 reaches 15 mm, the pushing of the push-rod type indenter 32 is stopped, and the nozzle 34 is blocked with the baffle 35.
S7. S3 to S6 are repeated to finally obtain a high-uniformity 7085 aluminum alloy ingot with a thickness of 400 nm.

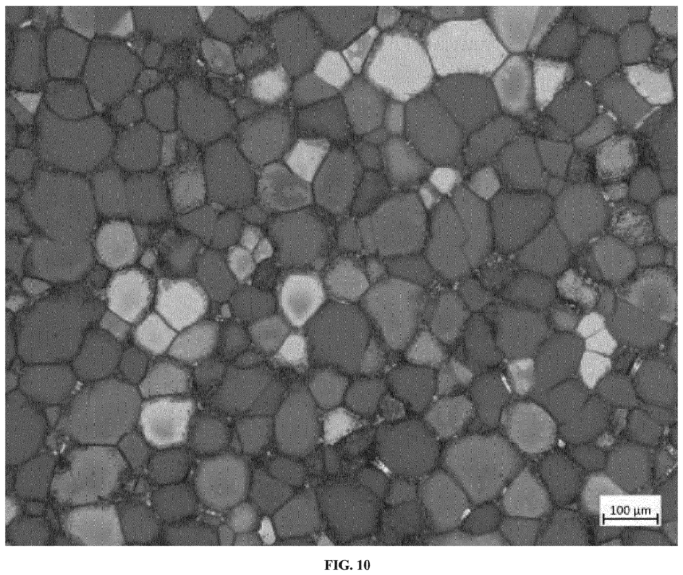

As shown in FIG. 10- 11, the internal grain structure of the high-uniformity 7085 aluminum alloy ingot has an average grain size of 70 microns, which has high structural uniformity.

Specific examples are used herein for illustration of the principles and embodiments of the present disclosure. The description of the embodiments is merely used to help illustrate the method and its core principles of the present disclosure. In addition, a person of ordinary skill in the art can make various modifications in terms of specific embodiments and scope of application in accordance with the teachings of the present disclosure. In conclusion, the content of this specification shall not be construed as a limitation to the present disclosure.

## Claims

1. A liquid metal additive manufacturing device, comprising:
a vacuum chamber;
a translation element arranged in the vacuum chamber;
a casting mold element arranged in the vacuum chamber, wherein the casting mold element is movably installed on the translation element, and capable of reciprocating in a length of the translation element;
a jet element arranged in the vacuum chamber, wherein the jet element is located above the translation element, and capable of injecting a melt into the casting mold element;
a cooling element arranged in the vacuum chamber, wherein the cooling element is located above the translation element, a lower end of the cooling element is able to extend into the casting mold element to cool and press down the melt until the melt in the casting mold element solidifies to form an alloy ingot; and
a scanning and heating element arranged in the vacuum chamber, wherein the scanning and heating element is located above the translation element, and capable of heating and melting a surface layer of the alloy ingot;
the cooling element, the scanning and heating element and the jet element are sequentially arranged in the length direction of the translation element.

2. The liquid metal additive manufacturing device according to claim 1, wherein the translation element comprises a slide rail and a driving part; the driving part is able to drive the casting mold element to reciprocate in a length direction of the slide rail to be below the jet element, the cooling element or the scanning and heating element.

3. The liquid metal additive manufacturing device according to claim 1, wherein the casting mold element comprises a casting mold body and a bottom plate; a lower end of the casting mold body is movably connected to the translation element, the bottom plate is installed on an inner bottom surface of the casting mold body, and the casting mold body is used for molding the alloy ingot.

4. The liquid metal additive manufacturing device according to claim 3, wherein the casting mold body is made of a high-temperature-resistant thermal insulation material.

5. The liquid metal additive manufacturing device according to claim 1, wherein the jet element comprises a crucible, a heater, a push-rod type indenter, a baffle, and a plurality of nozzles; the crucible is used for storing the melt, and the heater is installed at the periphery of the crucible; the nozzle is installed at a lower end of the crucible and communicates with the inside of the crucible; the push-rod type indenter is movably installed in the crucible, and the push-rod type indenter is able to push out the melt in the crucible through the nozzle when moving downwards in the crucible; and the baffle is movably installed at a lower end of the nozzle to block or open the nozzle.

6. The liquid metal additive manufacturing device according to claim 5, wherein the plurality of nozzles are arranged in array at a lower bottom surface of the crucible.

7. The liquid metal additive manufacturing device according to claim 1, wherein the cooling element is a water-cooling indenter which is internally provided with a cooling channel, both ends of the cooling channel are able to communicate with outside environment, and the cooling channel is used for the introduction of cooling water.

8. The liquid metal additive manufacturing device according to claim 1, wherein the scanning and heating element is an arrayed laser, a plurality of laser heads on the arrayed laser are linearly arranged, and an arrangement direction of the plurality of laser heads is parallel to the length direction of the translation element; and the arrayed laser is able to reciprocate in a width of the translation element to cover the whole upper surface of the alloy ingot in the casting mold element.

9. The liquid metal additive manufacturing device according to claim 1, wherein the scanning and heating element is located above a first station of the translation element, the jet element is located above a second station of the translation element, and the cooling element is located above a third station of the translation element.

10. A liquid metal additive manufacturing method, wherein the liquid metal additive material device according to any one of claims 1 to 9 is used, the method comprises the following steps:
S1: refining an alloy melt to be prepared, then injecting the alloy melt into a crucible of a jet element, blocking a nozzle of the jet element with a baffle, turning on a heater of the jet element, controlling a temperature of the alloy melt above a freezing point temperature and holding the temperature to form a melt;
S2: turning on cooling water, and enabling the cooling water to circulate in a cooling element, vacuumizing a vacuum chamber and filling the vacuum chamber with high-purity argon to a normal pressure;
S3: moving a casting mold element to a second station of a translation element, and removing the baffle below the nozzle, pushing downwards a push-rod type indenter of the jet element, and enabling the melt to form an arrayed liquid column through the nozzle under the action of pressure to enter the casting mold element, stopping pushing the push-rod type indenter when a thickness of a liquid layer in the casting mold element reaches a set thickness value θ₁, and blocking the nozzle with the baffle;
S4: moving the casting mold element filled with the melt to a third station, turning on a water-cooling indenter and gently pressing down the water-cooling indenter along an inner wall of the casting mold element, and when the melt in the casting mold element completely reaches a solidification state to form an alloy ingot, lifting the water-cooling indenter;
S5: moving the casting mold element loaded with the alloy ingot to a first station, turning on an arrayed laser, scanning and heating a surface layer of the alloy ingot in a horizontal direction, remelting surface metal with a thickness of θ₂, wherein θ₂ is less than θ₁, and then turning off the arrayed laser; and
S6: moving the casting mold element to the second station again, removing the baffle below the nozzle, pushing the push-rod type indenter downwards, enabling the melt to form an arrayed liquid column through the nozzle under the action of pressure to enter the casting mold element; and stopping pushing the push-rod type indenter when the thickness of the liquid layer in the casting mold element reaches a set thickness value θ₁ again, and blocking the nozzle with the baffle; and
S7: repeating S3-S6 for multiple times to finally obtain an alloy ingot.
